# FASCICULE DE BREVET EUROPEEN

(11) **EP 3 256 898 B1**
(45) Date de publication et mention de la délivrance du brevet: **19.10.2022**
(21) Numéro de dépôt: 16707891.4
(22) Date de dépôt: 09.02.2016
(51) Int. Cl.: G02B 27/01, G02B 27/00, G06T 3/20

(54) **AFFICHEUR TÊTE-HAUTE À FENÊTRE DE VUE AUTOMATIQUEMENT AJUSTABLE**
HEAD-UP-ANZEIGE MIT AUTOMATISCH EINSTELLBAREM SICHTFENSTER
HEAD-UP DISPLAY WITH AUTOMATICALLY ADJUSTABLE VIEWING WINDOW

(30) Priorité: 13.02.2015 FR 1500288
(43) Date de publication de la demande: 20.12.2017
(73) Titulaire: Valeo Comfort and Driving Assistance, 94046 Créteil Cedex (FR)
(72) Inventeur: MERMILLOD, Pierre, 94046 Créteil Cedex (FR)
(74) Mandataire: Delplanque, Arnaud
(86) Numéro de dépôt international: PCT/FR2016/050293
(87) Numéro de publication internationale: WO 2016/128674

(56) Documents cités:
- EP-A2- 2 068 189
- WO-A2-2011/015843
- FR-A1- 3 005 752
- US-A1- 2009 243 963
- US-A1- 2010 073 636

## Description

La présente invention concerne un afficheur tête-haute à fenêtre de vue automatiquement ajustable, notamment pour véhicule automobile.

Les afficheurs tête-haute ont généralement pour fonction de superposer des informations d'aide au pilotage, à la navigation ou à la réalisation de la mission, dans le champ de vision d'un pilote d'aéronef par exemple. Il permet ainsi au pilote de surveiller son environnement en même temps que de lire des informations fournies par ses instruments de bord. Aujourd'hui, ces afficheurs sont également utilisés dans l'automobile.

De tels dispositifs comprennent un générateur d'image et un élément optique semi-réfléchissant configuré pour former une image virtuelle de l'image du générateur. L'image virtuelle est superposée à l'environnement dans le champ de vision du conducteur ou du pilote. Il est également possible d'utiliser le pare-brise du véhicule comme élément optique semi-réfléchissant pour former l'image virtuelle. Les caractéristiques techniques d'un tel afficheur se rapportent notamment à la position de l'élément optique par rapport à la route et au conducteur, ainsi qu'à l'angle d'incidence de l'image sur l'élément optique, afin notamment d'éviter les problèmes de distorsion.

Les générateurs d'image connus dans l'automobile, comprennent une ou plusieurs sources de lumière et une matrice de pixellisation qui reçoit le faisceau lumineux des sources. La matrice transmet ou réfléchit le faisceau lumineux en imprimant une image qui est formée grâce aux pixels. Chaque pixel est commandé individuellement, et peut soit avoir une position dite « ouverte », dans laquelle la lumière incidente participe à l'image, soit une position dite « fermée », dans laquelle la lumière incidente ne participe pas à l'image affichée. Ainsi, en fonction des pixels ouverts, on compose une image. On peut également utiliser un balayage laser comme moyen de formation d'images.

Il existe différents types de matrices, notamment les matrices de transistors de type TFT (pour « Thin Film Transistor » en anglais, qui signifie transistors en couches minces), qui fonctionnent en transmission de lumière, c'est-à-dire que le faisceau lumineux des sources traverse la matrice qui est agencée entre la source de lumière et l'élément optique. On connait aussi les matrices de type LCOS (pour « Liquid Crystal on Silicon » en anglais, qui signifie cristaux liquides sur silicium), et les matrices de micro-miroirs de type DMD (pour « Digital Micro-Mirror Device» en anglais, qui signifie dispositif digital à micro-miroirs), qui fonctionnent par réflexion du faisceau lumineux vers l'élément optique.

Un observateur voit l'image virtuelle à travers l'élément optique, l'image virtuelle apparaissant d'un côté de l'élément optique, alors que l'observateur est situé de l'autre côté de l'élément optique. De plus, les yeux de l'observateur doivent être positionnés dans une fenêtre de vue, communément appelée « boîte à œil ». La position de la fenêtre de vue est définie par la position de l'image virtuelle par rapport à l'élément optique. Ainsi, en dehors de cette fenêtre de vue, il n'est pas possible de voir l'image virtuelle.

Or, dans certains cas, il peut être nécessaire d'ajuster le positionnement de la fenêtre de vue pour l'adapter à un observateur, non seulement ponctuellement en fonction de l'observateur, mais aussi dans certaines utilisations qui demandent des ajustements successifs. En effet, par exemple dans un véhicule, un conducteur à tendance à bouger sa tête ou ses yeux lorsque le véhicule est dans un virage. Ses yeux risquent par conséquent de sortir de la fenêtre de vue, l'image virtuelle n'étant alors plus visible. Généralement, le conducteur à tendance à tourner la tête ou ses yeux vers l'intérieur du virage.

Dans les dispositifs actuels connus, il est possible d'agir sur l'élément optique semi-réfléchissant pour déplacer la fenêtre de vue. En effet, en changeant, par exemple, l'inclinaison de l'élément optique, on déplace l'image virtuelle, et par conséquent la fenêtre de vue. Pour cela, il est nécessaire d'utiliser des moyens mécaniques qui agissent sur l'élément optique.

Néanmoins, ces dispositifs ne permettent pas d'ajuster la fenêtre de vue en fonction de la route empruntée par le véhicule. Le conducteur ne peut pas ajuster la fenêtre de vue à chaque virage qu'il prend.

L'invention vise donc à améliorer la situation et à obtenir un afficheur tête haute dont la fenêtre de vue peut être ajustée automatiquement, notamment à chaque virage. Le document FR 3 005 752 A1 divulgue un afficheur tête haute comportant des moyens de commande configurés pour recevoir des données se rapportant à la conduite d'un véhicule et déplacer automatiquement la fenêtre de vue au moins latéralement en fonction de ces données, en déplaçant les éléments optiques ou l'afficheur en fonction des dites données.

Pour cela, l'invention concerne un afficheur tête haute à fenêtre de vue ajustable, notamment pour véhicule automobile, comportant toutes les caractéristiques de la revendication 1, des modes de réalisation additionnels étant définis dans les revendications dépendantes.

L'afficheur est remarquable en ce qu'il comporte des moyens de commande configurés pour recevoir des données se rapportant à la conduite d'un véhicule et déplacer automatiquement la fenêtre de vue au moins latéralement en fonction de ces données.

Grâce au dispositif, le conducteur du véhicule a toujours ses yeux bien positionnés dans la fenêtre de vue, quelle que soit la direction du véhicule. Ainsi, lorsque le véhicule prend un virage, la fenêtre de vue est automatiquement déplacée au moins latéralement pour que le conducteur ait toujours l'image virtuelle dans son champ de vision. Le conducteur n'est donc pas obligé de maintenir ses yeux à un endroit, ce qui le gênerait pour conduire dans chaque virage.

En outre, la position de la fenêtre de vue étant automatiquement modifiée à chaque virage, il n'est pas nécessaire pour le conducteur de commander lui-même l'ajustement à chaque fois.

L'invention sera mieux comprise à la lumière de la description suivante qui n'est donnée qu'à titre indicatif et qui n'a pas pour but de la limiter, accompagnée du dessin joint des figures suivantes :
- la figure 1, illustrant de façon schématique, le fonctionnement d'un mode de réalisation d'un afficheur selon l'invention,
- la figure 2, illustrant de façon schématique, le déplacement latéral de la fenêtre de vue de l'afficheur de la figure 1, en vue de dessus.

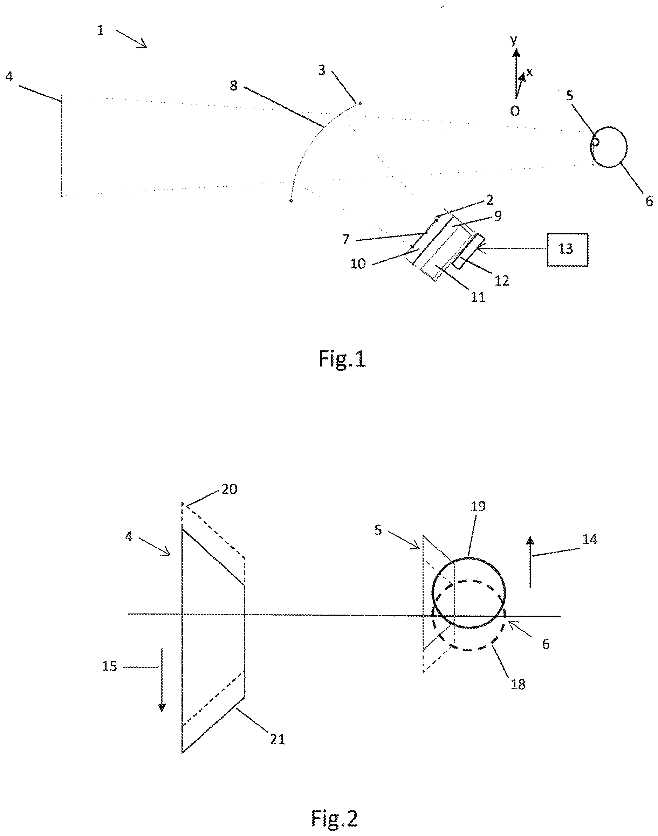

La figure 1 représente le fonctionnement d'un afficheur tête-haute 1, par exemple d'un véhicule automobile. L'afficheur 1 comprend un générateur d'image 9, configuré pour afficher une image 7 sur une surface d'affichage 2. Le générateur d'image 9 comprend par exemple au moins une source de lumière 11 apte à émettre un faisceau lumineux, et une matrice de pixellisation 10 configurée pour former l'image 7 à partir du faisceau lumineux. Les sources de lumières 11 sont par exemple des diodes électroluminescentes, qui sont disposées dans une partie du générateur. Le générateur comporte la matrice de pixellisation 10, par exemple de type TFT, sur sa face de sortie. Ainsi, les diodes émettent un faisceau vers la matrice qui imprime une image 7 en transmission sur la surface d'affichage 2 du générateur d'image 9. Le générateur d'image 9 est par exemple configuré pour former une image sensiblement rectangulaire.

Dans une variante, on peut utiliser un système à balayage laser muni d'au moins une diode laser, comme générateur d'image.

L'afficheur 1 comprend également un élément optique 3 semi-réfléchissant agencé à distance du générateur d'image et configuré pour faire apparaître d'un premier côté de l'élément optique 3 une image virtuelle 4 de l'image 7 de la surface d'affichage 2. L'image virtuelle 4 est visible pour un observateur 6 s'il regarde l'élément optique 3 en étant placé de l'autre côté de l'élément optique 3. Comme le montre la figure 1, l'image 7 est réfléchie en direction de l'observateur 6, par une partie 8 de la surface de l'élément optique 3. Le trajet de l'image 7 est représenté par des traits en pointillés. L'élément optique 3 forme ainsi une image virtuelle 4 de l'image 7, qui apparaît du premier côté à une certaine distance de l'élément optique 3.

L'observateur 6 doit être du deuxième côté de l'élément optique 3, et il voit l'image virtuelle 4 si ses yeux sont à l'intérieur d'une fenêtre de vue 5 située du deuxième côté de l'élément optique 3. Les dimensions de la fenêtre de vue 5 sont définies notamment par la taille et la forme de la partie 8 de la surface de l'élément optique 3 qui réfléchit l'image 7.

L'élément optique 3 permet ainsi à un observateur 6 à la fois de voir l'image virtuelle 4 et de voir à travers l'élément optique 3. Pour un observateur qui se trouve du deuxième côté de l'élément optique 3, l'image virtuelle 4 est superposée dans son champ de vision à l'environnement vu à travers l'élément optique 3. Ici, l'élément optique 3 est une lame semi-réfléchissante.

Dans un autre mode de réalisation de l'afficheur, utilisé dans un véhicule et qui n'est pas représenté sur les figures, une partie du pare-brise sert d'élément optique semi-réfléchissant. A cette fin, le reste de l'afficheur est agencé dans la planche de bord de manière à pouvoir utiliser le pare-brise. Dans ce cas, un miroir peut être agencé sur le chemin optique de l'image de manière à la réfléchir vers la partie du pare-brise.

En outre, l'élément optique 3 peut présenter une courbure pour porter une puissance optique afin de faire apparaître l'image virtuelle 4 à une certaine distance de l'élément optique 3, et ainsi d'être superposée convenablement à l'environnement apparaissant dans le champ de vision de l'observateur 6. La puissance optique est une caractéristique physique, qui détermine la capacité d'un système optique à faire converger ou diverger la lumière. Elle est égale au rapport entre l'angle sous lequel l'œil voit l'image en sortie du système et la taille de l'objet. La puissance optique permet donc de régler la taille de l'image virtuelle 4.

Selon l'invention, l'afficheur 1 comporte des moyens de commande 12 configurés pour recevoir des données se rapportant à la conduite d'un véhicule et déplacer automatiquement la fenêtre de vue 5 au moins latéralement en fonction de ces données. Les données concernent de préférence, soit le déplacement du véhicule, par exemple sa direction, soit la position de la tête ou des yeux de l'observateur 6 dans le véhicule.

Dans un premier mode de réalisation, l'afficheur 1 comprend des moyens de détection 13 de la position de l'observateur 6. Les moyens de détection 13 fournissent aux moyens de commande 12 un signal correspondant à la position de l'observateur 6, afin de régler la fenêtre de vue 5 en déplaçant l'image 7. Les moyens de détection 13 observent par exemple la position des yeux de l'observateur 6 pour ajuster la fenêtre de vue 5. Les moyens de détection 13 sont par exemple une caméra, ou un détecteur de mouvement. Les moyens de détection 13 sont décrits, ici, comme faisant partie de l'afficheur 1, mais ils peuvent aussi être extérieurs à l'afficheur 1, ce dernier recevant les données fournies par ces moyens de détection 13 extérieurs.

Dans un deuxième mode de réalisation, les moyens de commande reçoivent des données de direction du véhicule, par exemple d'un système informatique du véhicule du type ordinateur de bord, qui enregistre des paramètres tels que la vitesse du véhicule, ou de l'orientation du volant, en liaison avec des capteurs agencés sur le véhicule.

Dans un troisième mode de réalisation, les moyens de commande reçoivent des données issues d'un localisateur, par exemple de type GPS (« Global Positioning System », pour système de localisation global en français), qui peut mesurer le rayon de courbure d'un virage, par exemple.

Les sources fournissant les données aux moyens de commande des trois modes de réalisation peuvent être cumulatives. En outre, ces trois modes de réalisation sont décrits à titre d'exemple, et n'ont aucune valeur limitative concernant l'invention.

Pour déplacer la fenêtre de vue, l'afficheur déplace l'image virtuelle.

Dans une première variante de réalisation, l'afficheur 1 est configuré pour afficher l'image 7 sur une partie seulement de la surface d'affichage 2. Autrement dit, il y a toujours une autre partie de la surface d'affichage qui n'est pas utilisée pour afficher l'image 7. De préférence, cette autre partie entoure l'image affichée afin de pouvoir déplacer l'image 7 selon plusieurs axes et par suite l'image virtuelle 4, et ainsi régler la position de la fenêtre de vue 5 dans plusieurs directions. A cette fin, les moyens de commande 12 sont configurés pour déplacer l'image 7 sur la surface d'affichage 2.

Dans une deuxième variante de réalisation, les moyens de commande 12 comprennent des moyens mécaniques configurés pour déplacer mécaniquement la position d'un élément de l'afficheur en fonction desdites données, par exemple celle de l'élément optique 3, ou bien par exemple celle d'un miroir non représenté sur les figures, qui est disposé sur le trajet optique de l'image entre le générateur d'image 9 et l'élément optique 3.

La première et la deuxième variante peuvent être cumulatives, par exemple une variante peut servir à déplacer la fenêtre de vue 5 selon un premier axe, par exemple horizontal (Ox, qui est perpendiculaire au plan de la figure 1), et la deuxième variante, à déplacer la fenêtre de vue 5 selon un second axe, par exemple vertical (Oy qui est dans le plan de la figure 1). Autrement dit, on déplace l'image 7 sur le générateur d'image 9 pour déplacer la fenêtre de vue 5 selon le premier axe, et des moyens mécaniques déplacent mécaniquement la position d'un élément de l'afficheur, pour déplacer la fenêtre de vue 5 selon le second axe.

La figure 2 illustre, en vue de dessus, un exemple d'ajustement latéral ou horizontal de la fenêtre de vue 5 lorsque le véhicule prend un virage vers la gauche. La tête de l'observateur 6 se décale vers la droite, d'une première position 18 en traits pointillés, à une deuxième position 19 en traits continus, le déplacement de la tête étant représenté par une flèche 14. Selon l'invention, les moyens de commande 12 ajustent automatiquement la fenêtre de vue 5 vers la droite pour accompagner la tête de l'observateur 6. A cette fin, les moyens de commande 12 déplacent l'image virtuelle 4 vers la gauche, comme le montre une autre flèche 15, d'une position 20 (pointillés) à une position 21 (traits continus). Ainsi, l'observateur 6 garde toujours ses yeux dans la fenêtre de vue 5 pour voir l'image virtuelle 4, quel que soit le trajet du véhicule.

De préférence, les moyens de déplacement 12 du générateur sont configurés pour déplacer également l'image 7 sur la surface d'affichage 2 selon un second axe sensiblement perpendiculaire au premier. Ainsi, on peut également régler la position de la fenêtre de vue 5 verticalement.

## Revendications

1. Afficheur (1) tête haute à fenêtre de vue ajustable, notamment pour véhicule automobile, comportant :
- un générateur d'image (9) configuré pour afficher une image (7) sur une surface d'affichage (2),
- un élément optique (3) semi-réfléchissant agencé à distance du générateur d'image (9) et configuré pour former d'un premier côté de l'élément optique (3) une image virtuelle (4) de l'image (7) du générateur d'image (9), l'image virtuelle (4) étant visible depuis une fenêtre de vue (5) située d'un deuxième côté de l'élément optique (3),
**caractérisé en ce que** l'afficheur (1) comporte des moyens de commande (12) configurés pour recevoir des données se rapportant à la conduite d'un véhicule et déplacer automatiquement la fenêtre de vue (5) au moins latéralement en fonction de ces données, et **en ce que** les moyens de commande (12) sont configurés pour déplacer l'image (7) sur la surface d'affichage (2) en fonction desdites données, l'image (7) étant affichée seulement sur une partie de la surface d'affichage (2).

2. Afficheur selon la revendication 1, **caractérisé en ce qu'**il comprend au moins un miroir agencé de manière à réfléchir l'image du générateur d'image (9) vers l'élément optique (3).

3. Afficheur selon la revendication 2, **caractérisé en ce que** les moyens de commande (12) comprennent des moyens mécaniques configurés pour modifier la position du miroir en fonction desdites données.

4. Afficheur selon la revendication 1 ou 2, **caractérisé en ce que** les moyens de commande (12) comprennent des moyens mécaniques configurés pour modifier la position de l'élément optique (3) en fonction desdites données.

5. Afficheur selon la revendication 3 ou 4, **caractérisé en ce que** les moyens mécaniques sont configurés pour modifier la position de la fenêtre de vue (5) selon un axe vertical (Oy).

6. Afficheur selon l'une quelconque des revendications précédentes, **caractérisé en ce qu'**il comprend des moyens de détection (13) de la position de la tête ou des yeux d'un observateur (6), les moyens de détection (13) étant aptes à fournir un signal aux moyens de commande (12), le signal constituant au moins en partie lesdites données.

7. Afficheur selon l'une quelconque des revendications précédentes, **caractérisé en ce que** les moyens de commande (12) sont configurés pour déplacer la fenêtre de vue (5) vers la droite lorsque le véhicule tourne à droite et vers la gauche lorsque le véhicule tourne à gauche, l'information liée au virage du véhicule constituant lesdites données.

8. Afficheur selon l'une quelconque des revendications précédentes, **caractérisé en ce que** l'élément optique (3) est une lame semi-réfléchissante.

9. Afficheur selon l'une quelconque des revendications 1 à 7 **caractérisé en ce que** l'élément optique (3) est une partie d'un pare-brise de véhicule.

10. Afficheur selon l'une quelconque des revendications précédentes, **caractérisé en ce que** le générateur d'image (9) comprend au moins une source de lumière apte à émettre un faisceau lumineux, et une matrice de pixellisation configurée pour former l'image virtuelle (4) à partir du faisceau lumineux.

11. Afficheur selon l'une quelconque des revendications précédentes, **caractérisé en ce que** l'élément optique (3) présente une courbure de manière à porter au moins en partie la puissance optique nécessaire à la formation de l'image virtuelle (4).

12. Afficheur selon la revendication 1, **caractérisé en ce que** les données se rapportant à la conduite d'un véhicule sont à choisir, prises ensemble ou séparément, parmi :
- des données liées à la position de la tête ou les yeux d'un observateur (6),
- des données liées à la vitesse du véhicule, et/ou à l'orientation du volant,
- des données liées à la localisation du véhicule.

## Patentansprüche

1. Head-Up-Display (1) mit einstellbarem Sichtfenster, insbesondere für ein Kraftfahrzeug, das aufweist:
- einen Bildgenerator (9), der konfiguriert ist, ein Bild (7) auf einer Anzeigefläche (2) anzuzeigen,
- ein halb-reflektierendes optisches Element (3), das in Abstand zum Bildgenerator (9) angeordnet und konfiguriert ist, auf einer ersten Seite des optischen Elements (3) ein virtuelles Bild (4) des Bilds (7) des Bildgenerators (9) zu formen, wobei das virtuelle Bild (4) von einem Sichtfenster (5) aus sichtbar ist, das sich auf einer zweiten Seite des optischen Elements (3) befindet,
**dadurch gekennzeichnet, dass** das Display (1) Steuereinrichtungen (12) aufweist, die konfiguriert sind, sich auf das Lenken eines Fahrzeugs beziehende Daten zu empfangen, und das Sichtfenster (5) abhängig von diesen Daten automatisch zumindest seitlich zu verschieben, und dass die Steuereinrichtungen (12) konfiguriert sind, das Bild (7) abhängig von den Daten auf der Anzeigefläche (2) zu verschieben, wobei das Bild (7) nur in einem Teil der Anzeigefläche (2) angezeigt wird.

2. Display nach Anspruch 1, **dadurch gekennzeichnet, dass** es mindestens einen Spiegel aufweist, der so angeordnet ist, dass er das Bild vom Bildgenerator (9) zum optischen Element (3) reflektiert.

3. Display nach Anspruch 2, **dadurch gekennzeichnet, dass** die Steuereinrichtungen (12) mechanische Einrichtungen enthalten, die konfiguriert sind, die Position des Spiegels abhängig von den Daten zu ändern.

4. Display nach Anspruch 1 oder 2, **dadurch gekennzeichnet, dass** die Steuereinrichtungen (12) mechanische Einrichtungen enthalten, die konfiguriert sind, die Position des optischen Elements (3) abhängig von den Daten zu ändern.

5. Display nach Anspruch 3 oder 4, **dadurch gekennzeichnet, dass** die mechanischen Einrichtungen konfiguriert sind, die Position des Sichtfensters (5) gemäß einer senkrechten Achse (Oy) zu ändern.

6. Display nach einem der vorhergehenden Ansprüche, **dadurch gekennzeichnet, dass** es Erfassungseinrichtungen (13) der Position des Kopfs oder der Augen eines Betrachters (6) enthält, wobei die Erfassungseinrichtungen (13) geeignet sind, ein Signal an die Steuereinrichtungen (12) zu liefern, wobei das Signal zumindest zum Teil die Daten bildet.

7. Display nach einem der vorhergehenden Ansprüche, **dadurch gekennzeichnet, dass** die Steuereinrichtungen (12) konfiguriert sind, das Sichtfenster (5) nach rechts zu verschieben, wenn das Fahrzeug nach rechts abbiegt, und nach links zu verschieben, wenn das Fahrzeug nach links abbiegt, wobei die mit der Kurve des Fahrzeugs verbundene Information die Daten bildet.

8. Display nach einem der vorhergehenden Ansprüche, **dadurch gekennzeichnet, dass** das optische Element (3) eine halbreflektierende Lamelle ist.

9. Display nach einem der Ansprüche 1 bis 7, **dadurch gekennzeichnet, dass** das optische Element (3) Teil einer Windschutzscheibe eines Fahrzeugs ist.

10. Display nach einem der vorhergehenden Ansprüche, **dadurch gekennzeichnet, dass** der Bildgenerator (9) mindestens eine Lichtquelle, die geeignet ist, ein Lichtbündel zu emittieren, und eine Pixelierungsmatrix enthält, die konfiguriert ist, das virtuelle Bild (4) ausgehend vom Lichtbündel zu formen.

11. Display nach einem der vorhergehenden Ansprüche, **dadurch gekennzeichnet, dass** das optische Element (3) eine Krümmung aufweist, um die für das Formen des virtuellen Bilds (4) notwendige optische Leistung zumindest zum Teil zu tragen.

12. Display nach Anspruch 1, **dadurch gekennzeichnet, dass** die sich auf das Lenken eines Fahrzeugs beziehenden Daten zusammen oder getrennt auszuwählen sind aus:
- mit der Position des Kopfs oder der Augen eines Betrachters (6) verbundenen Daten,
- mit der Geschwindigkeit des Fahrzeugs und/oder der Ausrichtung des Lenkrads verbundenen Daten,
- mit der Lokalisierung des Fahrzeugs verbundenen Daten.

## Claims

1. Head-up display (1) with an adjustable viewing window, in particular for a motor vehicle, comprising:
- an image generator (9) configured to display an image (7) on a display surface (2),
- a semireflective optical element (3) arranged at a distance from the image generator (9) and configured to form, on a first side of the optical element (3), a virtual image (4) of the image (7) from the image generator (9), the virtual image (4) being visible from a viewing window (5) located on a second side of the optical element (3),
**characterized in that** the display (1) comprises control means (12) configured to receive data relating to the driving of a vehicle and automatically move the viewing window (5) at least sideways in accordance with these data, and **in that** the control means (12) are configured to move the image (7) on the display surface (2) in accordance with said data, the image (7) being displayed only on part of the display surface (2).

2. Display according to Claim 1, **characterized in that** it comprises at least one mirror arranged so as to reflect the image from the image generator (9) towards the optical element (3).

3. Display according to Claim 2, **characterized in that** the control means (12) comprise mechanical means configured to modify the position of the mirror in accordance with said data.

4. Display according to Claim 1 or 2, **characterized in that** the control means (12) comprise mechanical means configured to modify the position of the optical element (3) in accordance with said data.

5. Display according to Claim 3 or 4, **characterized in that** the mechanical means are configured to modify the position of the viewing window (5) on a vertical axis (Oy) .

6. Display according to any one of the preceding claims, **characterized in that** it comprises detection means (13) for detecting the position of the head or of the eyes of an observer (6), the detection means (13) being able to deliver a signal to the control means (12), the signal at least in part constituting said data.

7. Display according to any one of the preceding claims, **characterized in that** the control means (12) are configured to move the viewing window (5) towards the right when the vehicle turns right and towards the left when the vehicle turns left, the information linked to the turning of the vehicle constituting said data.

8. Display according to any one of the preceding claims, **characterized in that** the optical element (3) is a semireflective plate.

9. Display according to any one of Claims 1 to 7, **characterized in that** the optical element (3) is part of a vehicle windscreen.

10. Display according to any one of the preceding claims, **characterized in that** the image generator (9) comprises at least one light source able to emit a light beam, and a pixel matrix configured to form the virtual image (4) from the light beam.

11. Display according to any one of the preceding claims, **characterized in that** the optical element (3) exhibits a curvature so as at least in part to have the optical power necessary for forming the virtual image (4) .

12. Display according to Claim 1, **characterized in that** the data relating to the driving of a vehicle are to be chosen, taken together or separately, from among:
- data linked to the position of the head or the eyes of an observer (6),
- data linked to the speed of the vehicle, and/or to the orientation of the steering wheel,
- data linked to the location of the vehicle.
